(19) Europäisches Patentamt
European Patent Office
Office européen des brevets

(11) Veröffentlichungsnummer : **0 105 941
B1**

(12) **EUROPÄISCHE PATENTSCHRIFT**

(45) Veröffentlichungstag der Patentschrift :
**02.01.86**

(21) Anmeldenummer : **82109281.4**

(22) Anmeldetag : **07.10.82**

(51) Int. Cl.⁴ : **G 03 B 27/46**

(54) **Mikroverfilmungsvorrichtung.**

(43) Veröffentlichungstag der Anmeldung :
**25.04.84 Patentblatt 84/17**

(45) Bekanntmachung des Hinweises ·auf die Patenterteilung : **02.01.86 Patentblatt 86/01**

(84) Benannte Vertragsstaaten :
**AT BE CH DE FR GB IT LI LU NL SE**

(56) Entgegenhaltungen :
**DE-A- 2 236 570
US-A- 1 885 863
US-A- 2 371 542
US-A- 2 947 217
US-A- 4 134 105
US-A- 4 148 579
US-A- 4 193 674**

(73) Patentinhaber : **STB Strahlentechnische Bilddiagnostik Heinz Fleck
Haidkamp 95
D-2080 Pinneberg (DE)**

(72) Erfinder : **Lohse, Karl-Heinz
Im Bans 20a
D-2080 Pinneberg (DE)**

(74) Vertreter : **Fleck, Thomas, Dr.Dipl.-Chem. et al
Patentanwälte Raffay, Fleck & Partner Postfach 32 32
17
D-2000 Hamburg 13 (DE)**

**Beschreibung**

Die vorliegende Erfindung betrifft eine Mikroverfilmungsvorrichtung nach dem Oberbegriff des Anspruchs 1.

Eine derartige Vorrichtung ist praktisch aus der US-A-2 947 217 im Zusammenhang mit der US-A-4 193 674 bekanntgeworden. Gerade auf dem Spezialgebiet der Röntgenaufnahmen und ihrer Archivierung hat es sich als sehr arbeitsaufwendig erwiesen, die Aufnahmen und insbesondere die verkleinerten Aufnahmen manuell mit Kennziffern zu ihrer Archivierung und ihrer Wiedererkennung zu versehen. Beispielsweise hat man hier mit Ziffernschablonen und besonderen Beleuchtungskörpern gearbeitet und dennoch gerade häufig beim Wiederauffinden Probleme gehabt, Im weiteren Stand der Technik ist zwar noch die US-A-4 134 105 zu erwähnen, die eine Display-Anordnung darstellt, mit der eine wählbare Identifiziernummer gleichzeitig mit einem zu fotografierenden Objekt aufgenommen werden kann. Daß das Objekt selbst eine zu verkleinernde Fotografie oder eine Röntgenaufnahme sein kann, findet dort keine Erwähnung. Nachteilig macht sich deshalb im Stand der Technik insgesamt bemerkbar, daß eine fortlaufende Kodierung von Patientendaten bei der rollenartigen Mikroverfilmung von Röntgenaufnahmen keinen Eingang gefunden hat.

Der Erfindung liegt deshalb die Aufgabe zugrunde, die eingangs genannte Mikroverfilmungsvorrichtung derart zu verbessern, daß sie nicht nur schnell und sicher handhabbar ist, sondern gleichzeitig auch eine problemlose Archivierung von mikroverfilmten Röntgenaufnahmen ermöglicht.

Diese Aufgabe wird erfindungsgemäß durch die im Anspruch 1 gekennzeichnete Mikroverfilmungsvorrichtung gelöst. Danach können also kontinuierlich Röntgenaufnahmen üblichen Formats in gewünschter Weise schrittweise verkleinert werden, wobei gleichzeitig eine Registrierung bzw. Codierung der Aufnahme erfolgt. Erfindungsgemäß ist es dazu notwendig, entsprechende Kennziffern zusammen mit der jeweiligen Röntgenaufnahme abzulegen. Die Vielzahl der Kennziffern ermöglicht dabei nicht nur die fortlaufende Numerierung der Aufnahmen, sondern ebenfalls Angaben zur Person, zum Geburtsjahr oder anderen wichtigen Daten. Die erfindungsgemäße Mikroverfilmungsvorrichtung weist hierzu eine Eingabevorrichtung mit numerischer Tastatur für die Kennziffern auf und eine Anzeigevorrichtung mit einer Vielzahl von 7-Segment-Digitalziffern, die die Bedienungsperson eingeben und kontrollieren kann, während das Gehäuse geschlossen ist und die Verarbeitung abläuft. Gleichzeitig ist jedoch im Gehäuseinneren im Bereich der fotografisch zu verkleinernden Röntgenaufnahmen eine entsprechende Ziffernanzeige vorgesehen, deren Leuchtstärke so groß ist, daß die Kennziffern auf dem belichteten Mikrofilm abgebildet werden, so daß später eine einwandfreie Identifizierung möglich ist. Einfache handelsübliche 7-Segment-Digitalziffern haben jedoch eine zu geringe Leuchtstärke, so daß sie gar nicht mit auf dem Röntgenfilm abgebildet werden. Vorteilhafterweise schlägt die Erfindung deshalb vor, jedes einzelne Element der Digitalziffern mit mehreren Miniglühbirnen zu versehen, so daß dann die gewünschte Leuchtstärke gegeben ist und trotz der besonders kurzen Belichtungszeit eine Abbildung der Kennziffern erfolgt. Letztlich dienen diese Kennziffern u. a. zur Archivierung der Mikroaufnahmen und ihrer Wiedererkennung.

Im folgenden wird ein bevorzugtes Ausführungsbeispiel in Verbindung mit der Zeichnung zum besseren Verständnis der Erfindung näher erläutert.

Es zeigt :

Figur 1 eine perspektivische Ansicht der erfindungsgemäßen Mikroverfilmungsvorrichtung, wobei einige Gehäuseteile weggelassen sind, um einen besseren Einblick zu ermöglichen,

Figur 2 eine der Fig. 1 entsprechende schematische Ansicht, die nur einige Details hervorgehoben zeigt,

Figur 3 eine Draufsicht auf eine beispielsweise Ziffernanzeige im Gehäuseinneren, und

Figur 4 eine Querschnittsansicht der in Fig. 3 gezeigten Ziffernanzeige.

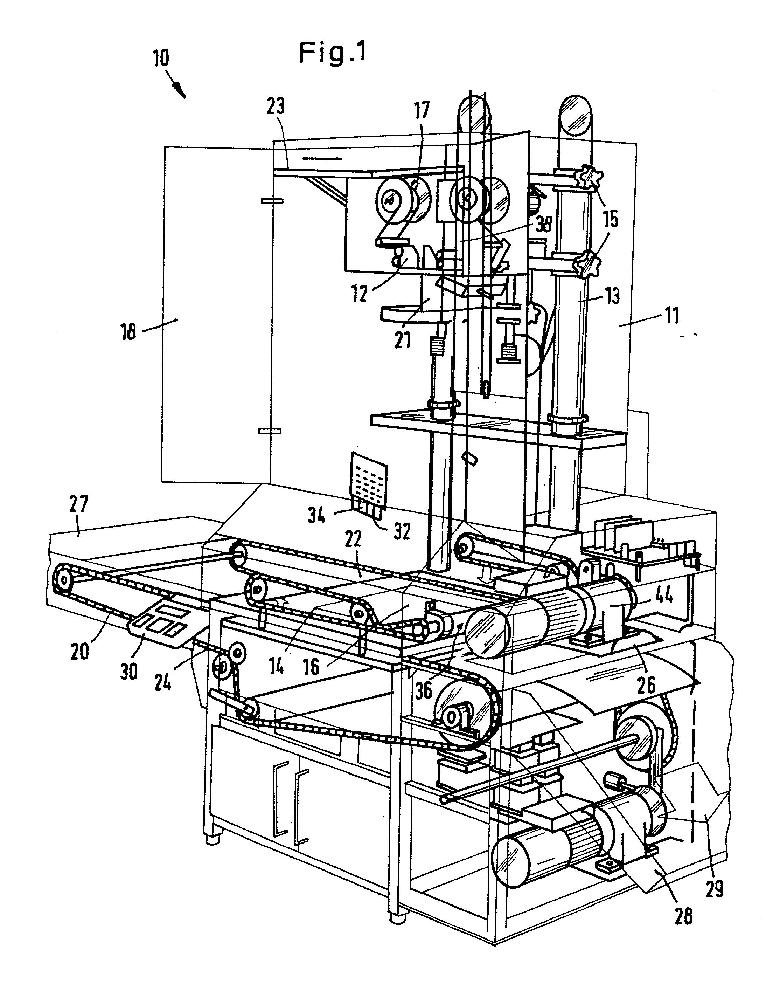

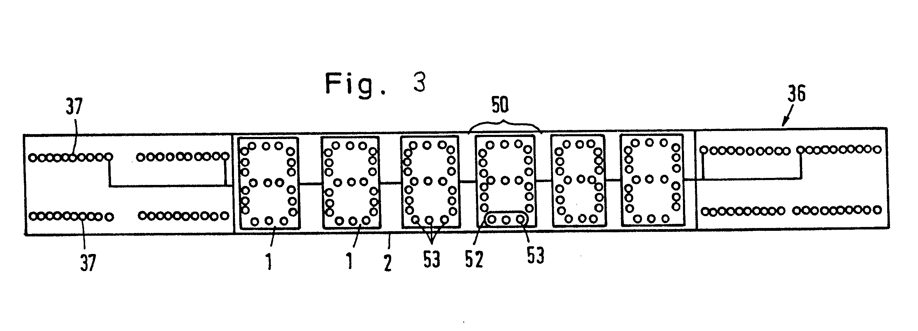

In Fig. 1 ist die erfindungsgemäße Mikroverfilmungsvorrichtung allgemein mit 10 bezeichnet. Sie besteht aus einem Gehäuse 18, das einen unteren und oberen Teil aufweist. Im oberen Teil 11 des Gehäuses 18 ist die Kamera 12 angeordnet, die in senkrechter Richtung verstellbar an zwei Rohrstangen 13 befestigt ist. Die Feststellschrauben auf der einen Seite sind mit 15 bezeichnet. Der Mikrofilm 38 selbst wird von einer größeren Vorratspule 17 auf die andere aufgewickelt, so daß ein kontinuierlicher Betrieb für eine Vielzahl zu verkleinernden Röntgenaufnahmen gesichert ist. Die Kamera 12 ohne Objektiv 21 ist innerhalb des oberen Gehäuseteils 11 nochmals in einem eigenen Gehäuse 23 angeordnet.

Senkrecht unterhalb der Kamera ist die zu verarbeitende Röntgenaufnahme 16 in einer paßgerechten Halterung 14 ausgerichtet. Während des Betriebs sind die Gehäuse 23 und 18 selbstverständlich geschlossen, so daß kein ungewünschtes Streulicht auf den Mikrofilm 38 einwirken kann. Nacheinander werden die zu verarbeitenden Röntgenaufnahmen von einer Bedienungsperson in die jeweilig außen zur Verfügung stehende Registerhalterung 14 eingelegt. Seitlich neben dem Gehäuse 18 ist hierfür eine tischartige Einlegevorrichtung 27 angeordnet, durch die der Förderer 20 hindurch verläuft. Der Kettenförderer 20 besteht aus einer Vielzahl von Zahnrädern und Ketten, die teilweise miteinander durch Stangen verbunden sind. Dieser Kettenförderer 20 fördert im Umlauf fünf Registerhalterungen für die Röntgenaufnahmen. Die Anzahl dieser Registerhalterungen 14 ist jedoch in keiner Weise kritisch sondern läßt sich beliebig verändern. Der Förderer 20 kann zusammen mit den Registerhalterungen 14 über den Einlaßschlitz 22 in das Gehäuseinnere gelangen. Entsprechend ist ebenfalls ein Auslaßschlitz 24 vorgesehen. Auf der gegenüberliegenden Gehäuseseite ist ein Schlitz 26 mit daran angrenzender Auffangvorrichtung 28 vorgesehen, die die verarbeiteten Röntgenaufnahmen aufnimmt, die in Pfeilrichtung 29 aus der jeweiligen Registerhalterung abgegeben und nach außen abgegeben werden.

Der gesamte Betriebsablauf wird durch die Eingabevorrichtung 30 gesteuert, die eine numerische Tastatur für Kennziffern aufweist, die nach Eingabe an der Anzeigevorrichtung 32 in Form von Digitalziffern 34 aufleuchten. Entsprechend zu den eingegebenen Digitalziffern ist auch im Gehäuseinneren im Bereich der zu verkleinernden Röntgenaufnahme eine entsprechende Ziffernanzeige vorgesehen, die mit 36 angedeutet ist. Die in Fig. 3 näher gezeigte Ziffernanzeige 36 besteht aus sechs 7-Segment-Digitalziffern, deren Einzelemente jeweils aus drei Miniglühbirnen mit 0,5 Watt bestehen. Hierdurch wird sichergestellt, daß die angesteuerten Ziffern der Anzeige 36 auch auf dem Mikrofilm 38 abgebildet sind.

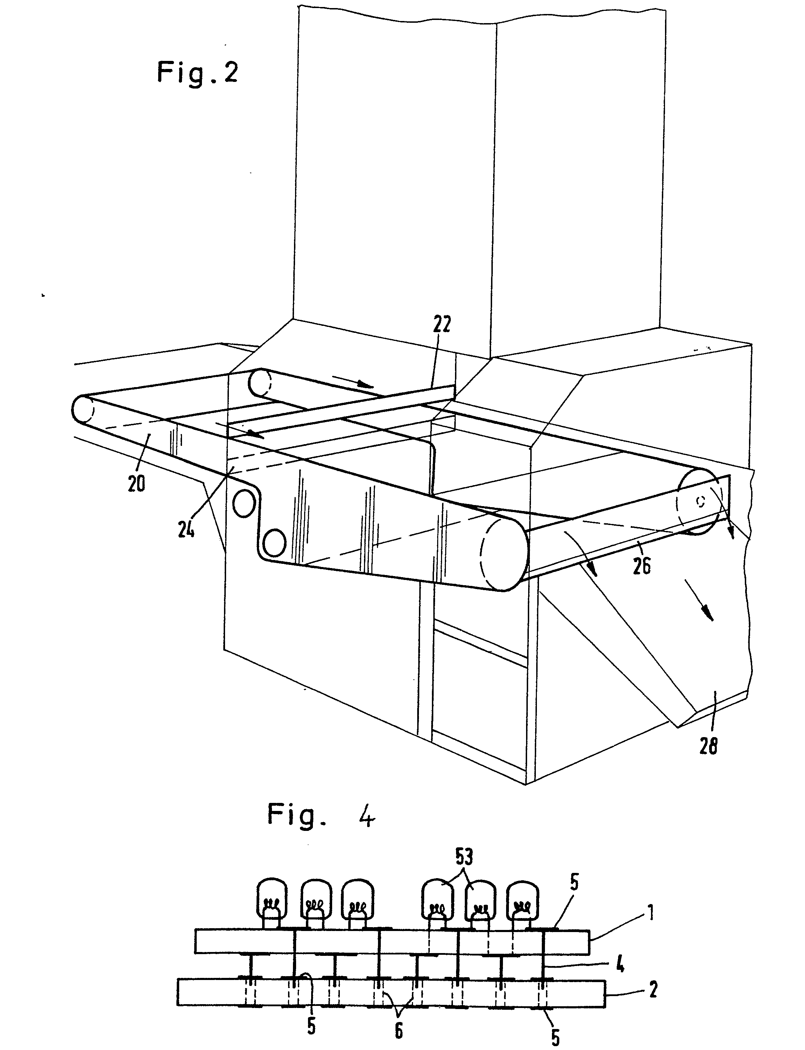

Die schematische Ansicht der Fig. 2 zeigt die erfindungsgemäße Vorrichtung aus der gleichen Sicht wie in Fig. 1. Der besseren Übersicht halber sind jedoch zahlreiche Details weggelassen und lediglich der Förderer 20 hervorgehoben worden.

In Fig. 3 ist eine beispielhafte Ziffernanzeige 36 gezeigt, die sechs Kennziffern aufweist. Die Anzahl dieser Kennziffern kann beliebig gewählt werden. Insbesondere haben sich zwölf Kennziffern 50 als vorteilhaft erwiesen, deren Einzelelemente 52 jeweils aus drei Miniglühbirnen 53 bestehen. Die Miniglühbirnen bzw. Glühlämpchen 53 sind pro Kennziffer auf einem isolierenden Kunststoffplättchen 1 befestigt, die wiederum über Metallstifte 4 mit dem darunterliegenden isolierenden Kunststoffstreifen 2 verbunden sind. Zur Stromleitung sind verzinnte Leiterbahnen 5 vorgesehen, sowie durch den Kunststoffstreifen 2 hindurch verlaufende Bohrungen 6, die innen verzinnt sind und in Fig. 4 mit gestrichelten Linien angedeutet sind. Ferner weist der Kunststoffstreifen 2 zur Befestigung noch eine Vielzahl von Bohrungen 37 für Vielfachanschlußstecker auf.

**Patentansprüche**

1. Mikroverfilmungsvorrichtung für eine in einer Registerhalterung angeordnete Röntgenaufnahme (16) üblichen Formats mit einer verstellbar angeordneten Kamera (12), die zusammen in einem verschließbaren, lichtundurchlässigen Gehäuse (18) angeordnet sind, bei der für die Zufuhr der zu verkleinernden Röntgenaufnahmen von außen ein im Umlaufbetrieb arbeitender Förderer (20) mit Registerhalterungen (14) für die Röntgenaufnahmen vorgesehen ist, der durch einen Einlaß- und Auslaßschlitz (22 bzw. 24) mit dem Gehäuseinneren verbunden ist, dadurch gekennzeichnet, daß am Gerät eine numerische Tastatur für eine Kennziffern aufweisende Eingabevorrichtung (30) und eine Anzeigevorrichtung (32) mit einer Vielzahl von Segment-Digitalziffern (34) vorgesehen ist, daß im Gehäuseinnern im Bereich der fotografisch zu verkleinernden Röntgenaufnahmen (16) eine entsprechende Ziffernanzeige (36) vorgesehen ist, deren Einzelemente jeweils aus mehreren Miniglühbirnen (53) bestehen, und daß die letzten vier Digitalziffern (34) der Anzeigevorrichtung (32) bzw. die Kennziffern der Ziffernanzeige (36) zur Erzielung einer fortlaufenden Aufnahmenumerierung mit der Kamera (12) bzw. deren Filmtransport gekoppelt sind, während die ersten acht Digitalziffern frei wählbare Eingaben für Patientendaten darstellen.

2. Vorrichtung nach Anspruch 1, dadurch gekennzeichnet, daß zwölf Segment-Digitalziffern (34) für die Anzeigevorrichtung (32) und die Ziffernanzeige (36) vorgesehen sind, wobei letztere 252 entsprechend schaltbare Miniglühbirnen (53) umfaßt.

**Claims**

1. Microfilming apparatus for an X-ray photograph (16) of usual format, disposed in a record holder, comprising an adjustably mounted camera (12) which are disposed together in a closable, opaque housing (18), a conveyor (20) possessing record holders (14) for the X-ray photographs and working in circulating motion being provided for the feed from outside of the X-ray photographs which are to be reduced, which conveyor is connected with the interior of the housing through an inlet and outlet slit (22, 24 respectively), characterized in that a numerical keyboard for an input apparatus (30) comprising code numbers and a display apparatus (32) comprising a plurality of segmental digits (34) are provided on the apparatus, that in the interior of the housing, in the region of the X-ray photographs (16) to be photographically reduced, a corresponding number display (36) is provided, the individual elements of which each consist of a plurality of mini incandescent bulbs (53), and that the last four digits (34) of the display apparatus (32) and the code numbers respectively of the number display (36) are coupled with the camera (12) and its film conveyor respectively for the purpose of achieving a continuous photograph numbering, whereas the first eight digits represent freely selectable inputs for patient data.

2. Apparatus according to Claim 1, characterized in that twelve segmental digits (34) for the display apparatus (32) and the number display (36) are provided, the latter comprising 252 appropriately switchable mini incandescent bulbs (53).

**Revendications**

1. Dispositif de microfilmage pour une radiographie de format usuel (16) placée dans un dispositif d'alignement avec une caméra (12) placée de manière mobile, disposés dans un bâti (18) opaque pouvant être fermé, dispositif dans lequel est prévu un transporteur (20) pour l'amenée de l'extérieur des radiographies à réduire qui fonctionne en rotation avec des dispositifs d'alignement (14) des radiographies et qui est relié à l'intérieur du bâti par une fente d'introduction et une fente de sortie (22, 24), caractérisé en ce qu'un clavier numérique est prévu sur l'appareil pour un dispositif d'introduction (30) présentant des indices et un dispositif d'affichage (32) avec une multitude de chiffres à segments (34), qu'un affichage numérique correspondant (36) est prévu à l'intérieur du bâti dans la zone des radiographies (16) devant être réduites par procédé photographique, affichage numérique dont les éléments individuels sont composés respectivement de plusieurs mini-ampoules (53) et que les quatre derniers chiffres (34) du dispositif d'affichage (32) et/ou les indices de l'affichage numérique (36) sont connectés à la caméra (12) ou à l'avancement du film de la caméra pour obtenir un numérotage continu des radiographies, tandis que les huit premiers chiffres représentent des données d'entrée pouvant être librement choisies pour des données concernant les malades.

2. Dispositif selon la revendication 1 caractérisé en ce que douze chiffres à segment (34) sont prévus pour le dispositif d'affichage (32) et l'affichage numérique (36), ce dernier comprenant 252 mini-ampoules (53) pouvant être commutées.

# Fig.1

Fig. 3

**Fig.2**

**Fig. 4**